# EUROPEAN PATENT SPECIFICATION

(11) **EP 3 716 776 B1**
(45) Date of publication and mention of the grant of the patent: **12.06.2024**
(21) Application number: 18836287.5
(22) Date of filing: 08.11.2018
(51) Int. Cl.: A23G 1/50, A23G 1/54

(54) **CHOCOLATE PRODUCTS**
SCHOKOLADEPRODUKTE
PRODUITS CHOCOLATÉS

(30) Priority: 28.11.2017 IN 201741042558
(43) Date of publication of application: 07.10.2020
(73) Proprietor: Kraft Foods Schweiz Holding GmbH, 6300 Zug (CH)
(72) Inventor: MACHAMANGALATH, Reena, Mumbai 400013 (IN); SINGH, Sidharth, Mumbai 400013 (IN); CARVAJAL, Ricardo, Birmingham B30 2LU (UA)
(74) Representative: Wilson Gunn
(86) International application number: PCT/IB2018/001354
(87) International publication number: WO 2019/106423

(56) References cited:
- EP-A1- 2 468 108
- EP-B1- 2 468 108
- WO-A1-96/31127
- WO-A1-2014/010822
- WO-A1-2015/091500
- WO-A2-01/35758
- DE-A1- 4 305 752
- DE-A1- 19 819 216
- DE-A1-102007 031 369
- DE-U1- 9 300 165
- LU-A7- 35 943

## Description

### Technical Field of the Invention

The present invention relates to chocolate compositions and products. More particularly, the invention relates to chocolate products comprising removable portions.

### Background to the Invention

It is common in the confectionery industry to produce chocolate compositions in a solid form for sale to customers.

A popular shape for such solid chocolate compositions is a rectangular block or tablet. Such tablets are often greater in volume than a consumer would wish to consume in one sitting, and therefore chocolate blocks and tablets are designed to be easily separated into smaller portions to either consume individually at intermittent time periods or to share with other persons.

A homogenous rectangular tablet of solid chocolate composition may be difficult to separate into portions of a size desired by a consumer, and so chocolate tablets are normally constructed to include multiple portions or chunks, separated by frangible lines. A consumer can then separate portions from the tablet of chocolate by hand and the consumer may choose the number of portions to separate at any given time.

Such frangible lines are often laid out in horizontal and vertical lines, creating a checkerboard pattern on the chocolate tablet. This allows the consumer to easily separate portions of a desired size from a tablet of solid chocolate composition.

Often such solid chocolate tablets are not uniform throughout. A tablet may comprise a rectangular perimeter, but within the edges the tablet may not comprise uniform portions. A selection of the portions may also comprise additional features such as different chocolate compositions, nuts, edible decorative features or varying shapes.

In some products, a chocolate tablet may comprise one or more decorative or non-uniform features located on top or within the tablet and set spaced apart from the edges of the tablet. Such features may comprise the use of different chocolate types, such as, for example, a decorative feature produced from white chocolate located centrally within a milk chocolate tablet. In order for a consumer to access such features for consumption, the consumer must separate portions of the tablet from the edges and advance inwards until they arrive at the centrally located feature or alternatively destroy the chocolate tablet to free the central feature.

WO 01/35758 A2 describes a chocolate product comprising a chocolate sheet (which may be a flat sheet, or curved such as a half-egg shape) with a "break-away" portion formed therein. The break-away portion is a portion removable from the sheet. The break-away portion may be surrounded by continuous or discontinuous lines of weakness.

DE 93 00 165 U1 describes a chocolate product comprising a chocolate sheet with a number of cavities spread throughout, and a second chocolate composition placed into these cavities.

EP 2 468 108 A1 describes a method of manufacturing an at least partially filled chocolate product by pressing a pre-fabricated "solid insert" (which is to be the filling) into the liquid chocolate, the insert having a temperature lower than the melting temperature of the chocolate.

It would therefore be desirable to provide a solid chocolate composition wherein a removable portion is located within the perimeter of the composition and is removable without affecting the perimeter.

It is therefore an aim of embodiments of the invention to overcome or mitigate at least one problem of the prior art and whether disclosed hereinabove or not.

### Summary of the Invention

According to a first aspect of the invention there is provided a solid chocolate composition comprising a main body comprising a plurality of chunks or consumable units separated by lines of weakness, and further comprising one or more removable portions set in and spaced apart from the perimeter of the composition, and wherein the removable portion or portions are connected to the main body by one or more areas or lines of weakness and are removable from the composition without changing the perimeter of the composition.

The main body may comprise any suitable shape which may be geometric or irregular. The main body may comprise a triangular prism, a cuboid, a pentagonal prism, a hexagonal prism, a heptagonal prism, an octagonal prism, a nonagonal prism or a decagonal prism, a sphere, an ellipsoid or an ovoid shape, for example.

The main body may comprise a cuboid shape and may define a substantially rectangular tablet. The main body is preferably a rectangular cuboid comprising a length greater than the width, and a width greater than the depth. The main body may be in the form of a slab or sheet, for example. The main body may comprise a rectangular cross-section that remains substantially similar along the length of the tablet. The length and width of the main body may be independently less than or equal to 10mm, or at least 10mm, 20mm, 30mm, 40mm, 50mm, 75mm, 100mm, 200mm or 300mm, for example. The depth of the main body may be less than or equal to 5mm, or at least 5mm, 10mm, 15mm, 20mm, 25mm, 30mm, 35mm, 40mm, 45mm or 50mm, for example.

The one or more areas of weakness may be configured to hold the removable portion within the solid chocolate composition during transport and storage of the product. The one or more areas of weakness may be configured to allow the removable portion to be detached from the main body and removed when pressure is applied by hand, in use. The one or more removable portions may be removed by a consumer holding the solid chocolate composition with one hand, and applying a force directly to the removable portion with the other hand so that the removable portion detaches from the main body, in use, for example. The one or more areas of weakness may allow the removable portion to be detached from the main body without removing any other part of the solid chocolate composition. The areas of weakness may comprise lines of weakness. For example, the areas of weakness may be areas or lines at least partially surrounding the or each removable portion in which the solid chocolate composition is substantially thinner than the main body, for example.

Each of the one or more removable portions may be connected to the main body by means of a single line or area of weakness surrounding the removable portion, or by a separate line or area of weakness extending along each side of the removable portion. The line or lines of weakness may extend along the entire border between the one or more removable portions and the main body, and thus may be a continuous unbroken line of weakness. Alternatively the one or more removable portions may be connected to the main body an intermittent or discontinuous are or line of weakness, such as a line of perforations, for example.

The one or more removable portions may be located substantially centrally within the perimeter of the main body. When the solid chocolate composition comprises a single removable portion, the geometric centre of the removable portion may be located substantially near to, or at, the geometric centre of the main body.

The one or more removable portions may be located off-centre within the main body, such as towards a perimeter edge of the main body. One or more removable portions may be located closer to a single edge or surface area than the other edges or surface areas of the main body. When the solid chocolate composition comprises a plurality of removable portions, a removable portion may be located towards each of the edges of the main body. The removable portions may be distributed evenly within the main body, or irregularly within the main body or randomly within the main body. When the solid chocolate composition comprises a single removable portion, the removable portion may be located near to an edge, or near to a corner region. The one or more removable portions may be substantially closer to any one or more edges than any other edge.

The main body and the one or more removable portions may comprise the same chocolate composition. The one or more removable portions may comprise substantially similar or identical percentage weights of milk and/or cocoa solids as the main body composition, for example.

The main body and one or more removable portions may comprise different chocolate compositions. When the solid chocolate composition comprises more than one removable portion, each removable portion may comprise the same a different chocolate composition. The one or more removable portions may comprise a substantially similar chocolate composition, but the main body may comprise a different chocolate composition.

The chocolate composition of the main body and removable portions may independently comprise milk chocolate, dark chocolate, plain chocolate or compound chocolate, for example. In some embodiments, the main body and one or more removable portions both comprise milk chocolate, dark chocolate, plain chocolate or compound chocolate, for example.

In some embodiments, at least one of the one or more removable portions may comprise a foodstuff other than chocolate, including any suitable type of non-chocolate foodstuff such as a baked item, boiled candy, jelly or gummy candy, chewing gum, nut, fruit or the like, for example. In other embodiments, at least one of the one or more removable portions may comprise a non-foodstuff item, such as a novelty item or child's toy, for example. In some embodiments comprising a plurality of removable portions, there may be at least one removable portion comprising a foodstuff (which may be chocolate or any other foodstuff) and at least one removable portion comprising a non-foodstuff (such as a novelty item or child's toy).

The one or more removable portions may comprise any desired shape. The one or more removable portions may comprise any regular geometric shape comprising straight or curved edges. The one or more removable portions may comprise any irregular geometric shape. The one or more removable portions may comprise a heart-shaped portion.

All of the removable portions may comprise the same shape, or one or more removable portions may comprise a different shape to one or more further removable portions.

The one or more removable portions may comprise substantially the same thickness as at least a portion of the main body. The one or more removable portions may comprise a thickness substantially similar or identical to the adjacent areas of the main body abutting or surrounding the removable portion. Each removable portion may comprise substantially the same thickness. The main body may comprise one or more substantially planar regions surrounding the one or more removable portions, and the removable portions may have a thickness the same or different from the surrounding planar areas.

The one or more removable portions may comprise a thickness either greater than or less than that of the main body. Each of the one or more removable portions may comprise a thickness greater than that of the main body and may protrude from one or more surfaces of the main body. Each of the one or more removable portions may comprise a thickness less than that of the main body. The solid chocolate composition may comprise one or more removable portions comprising a greater thickness than the main body, and one or more removable portions comprising a thickness less than the main body.

The one or more removable portions may themselves comprise one or more further removable sub-portions. Any number of the one or more removable portions may comprise further removable sub-portions. The one or more removable portions may comprise removable sub-portions comprising one or more areas of weakness, as described herein above.

The lines of weakness separating the chunks of the main body are different to the areas or lines of weakness surrounding the removable portions, and may be lines of reduced thickness separating chunks or consumable units in a solid chocolate tablet. The areas or lines of weakness surrounding the removable portions are configured such that the pressure on the removable portion or portions will remove the removable portion from the solid chocolate composition (e.g. by breaking areas or lines of weakness surrounding the removable portion) without affecting the perimeter of the solid chocolate composition and/or without requiring removal of any other part of the composition, whilst any other lines of weakness separating chunks or consumable will remain intact and unbroken.

The solid chocolate composition and/or each removable unit may comprise moulded chocolate.

### Detailed Description of the Invention

In order that the invention may be more clearly understood one or more embodiments thereof will now be described, by way of example only, with reference to the accompanying drawings, of which:
Figure 1 shows a top-down perspective view of an embodiment of the first aspect of the invention, comprising a solid chocolate composition with a removable portion.
Figure 2 shows a top-down perspective view of an embodiment of the first aspect of the invention wherein the removable portion has been detached from the main body.

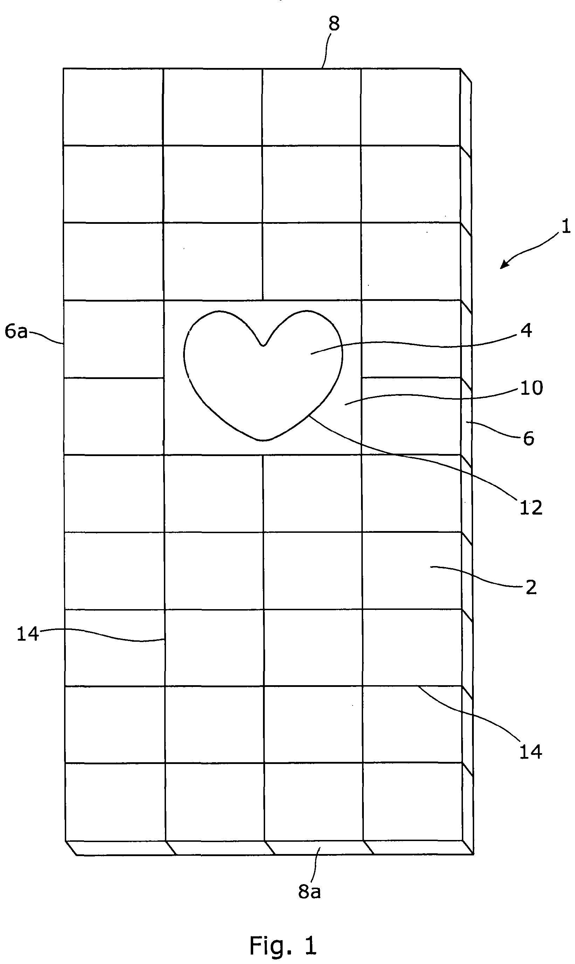

Figure 1 shows an embodiment of a solid chocolate composition of the invention in the form of a chocolate tablet 1 which comprises a main body 2 and a removable portion 4. The main body 2 is generally rectangular cuboid (slab or sheet) ii shape and comprises a pair of longer side walls 6, 6a, a pair of shorter side walls 8, 8a, and is divided into chunks by a checkerboard pattern of lines of weakness 14 formed from lines of reduced thickness chocolate within the body 2. The tablet 1 also includes a planar region 10 which surrounds the removable portion 4.

The removable portion 4 is connected to the planar region 10 by a line of weakness 12. The line of weakness 12 is a single line of weakness, and extends along the entire perimeter of the removable portion 4. The line of weakness 12 surrounding the removable portion 4 requires less force or pressure to break than lines of weakness 14 separating the chunks of the body 2.

The removable portion 4 is located within the perimeter of the main body 2, and spaced apart from the walls 6, 6a, 8, 8a. In the embodiment shown, the removable portion is spaced evenly between the longer walls 6, 6a, but is closer one shorter wall 8 then the other shorter wall 8a.

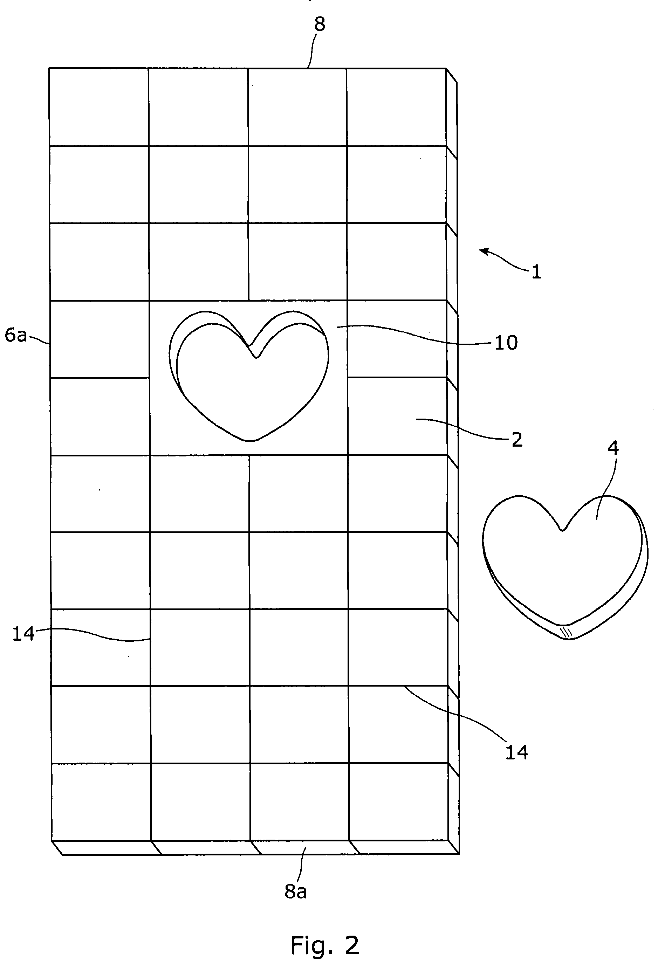

In use, with reference to both the Figures, the removable portion 4 may be detached from the main body 2, as shown in Figure 2. A user may apply pressure to the removable portion 4 with one hand, whilst holding the main body 2 with the other hand. Upon application of pressure to the removable portion 4 the line of weakness 12 ruptures such that the removable portion can then be removed; whilst the lines of weakness 14 between the chunks of the main body remain intact, as shown the configuration of Figure2. In addition, removal of the removable portion 4 does not entail or require removal of any other portion of the tablet 1 or main body 2, and the perimeter walls 6, 6a, 8, 8a remain unchanged and intact, with no break points or missing portions.

The main body 2 and removable portion 4 comprise milk chocolate in the embodiment shown in Figure 1 and 2, but in alternative embodiments the main body 2 and removable portion 4 may comprise a different chocolate composition such as dark chocolate or plain chocolate.

## Claims

1. A solid chocolate composition comprising a main body comprising a plurality of chunks or consumable units separated by lines of weakness, and further comprising one or more removable chocolate portions set in and spaced apart from the perimeter of the composition, and wherein the removable portion or portions are connected to the main body by one or more areas or lines of weakness and are removable from the composition without changing the perimeter of the composition.

2. A solid chocolate composition as claimed in claim 1 wherein the main body comprises a cuboid shape and defines a rectangular tablet.

3. A solid chocolate composition as claimed in any preceding claim wherein one or more removable portions is connected to the main body by means of a continuous line or area of weakness.

4. A solid chocolate composition as claimed in any preceding claim wherein one or more removable portions are connected to the main body by means of an intermittent or discontinuous are or line of weakness.

5. A solid chocolate composition as claimed in any preceding claim wherein one or more removable portions are located centrally within the perimeter of the main body.

6. A solid chocolate composition as claimed in any preceding claim wherein one or more removable portions are located off-centre within the main body such as near to or at a perimeter edge of the main body.

7. A solid chocolate composition as claimed in any preceding claim wherein the main body and one or more removable portions comprise the same chocolate composition.

8. A solid chocolate composition as claimed in any preceding claim wherein the main body and one or more removable portions comprise different chocolate compositions.

9. A solid chocolate composition as claimed in any preceding claim wherein the chocolate composition of one or more of the main body or removable portions comprise milk chocolate, dark chocolate, plain chocolate or compound chocolate.

10. A solid chocolate composition as claimed in any preceding claim wherein the one or more removable portions comprise an irregular or regular geometric shape.

11. A solid chocolate composition as claimed in any preceding claim wherein one or more removable portions comprise the same thickness to at least a portion of the main body.

12. A solid chocolate composition as claimed in any preceding claim wherein one or more removable portions comprise a thickness either greater than or less than that of the main body.

13. A solid chocolate composition as claimed in any preceding claim wherein one or more removable portions comprises one or more further removable sub-portions.

## Patentansprüche

1. Feste Schokoladenzusammensetzung, umfassend einen Hauptkörper, umfassend eine Vielzahl von Brocken oder verzehrbaren Einheiten, die durch Schwächungslinien voneinander getrennt sind, und ferner umfassend einen entfernbaren oder mehrere entfernbare Schokoladenabschnitte, die in den Umfang der Zusammensetzung eingesetzt und von diesem beabstandet sind, und wobei der entfernbare Abschnitt oder die entfernbaren Abschnitte durch eine(n) oder mehrere Schwächungsbereiche oder -linien mit dem Hauptkörper verbunden sind und aus der Zusammensetzung entfernbar sind, ohne den Umfang der Zusammensetzung zu verändern.

2. Feste Schokoladenzusammensetzung nach Anspruch 1, wobei der Hauptkörper eine Quaderform umfasst und eine rechteckige Tafel definiert.

3. Feste Schokoladenzusammensetzung nach einem der vorstehenden Ansprüche, wobei ein entfernbarer Abschnitt oder mehrere entfernbare Abschnitte mittels einer durchgehenden Schwächungslinie oder einem durchgehenden Schwächungsbereich mit dem Hauptkörper verbunden sind.

4. Feste Schokoladenzusammensetzung nach einem der vorstehenden Ansprüche, wobei ein entfernbarer Abschnitt oder mehrere entfernbare Abschnitte mittels einer unterbrochenen oder durchgehenden sind oder einem unterbrochenen oder durchgehenden Schwächungsbereich mit dem Hauptkörper verbunden sind.

5. Feste Schokoladenzusammensetzung nach einem der vorstehenden Ansprüche, wobei ein entfernbarer Abschnitt oder mehrere entfernbare Abschnitte sich mittig innerhalb des Umfangs des Hauptkörpers befinden.

6. Feste Schokoladenzusammensetzung nach einem der vorstehenden Ansprüche, wobei ein entfernbarer Abschnitt oder mehrere entfernbare Abschnitte sich außermittig innerhalb des Hauptkörpers, wie in der Nähe oder an einer Umfangskante des Hauptkörpers, befinden.

7. Feste Schokoladenzusammensetzung nach einem der vorstehenden Ansprüche, wobei der Hauptkörper und ein entfernbarer Abschnitt oder mehrere entfernbare Abschnitte dieselbe Schokoladenzusammensetzung umfassen.

8. Feste Schokoladenzusammensetzung nach einem der vorstehenden Ansprüche, wobei der Hauptkörper und ein entfernbarer Abschnitt oder mehrere entfernbare Abschnitte unterschiedliche Schokoladenzusammensetzungen umfassen.

9. Feste Schokoladenzusammensetzung nach einem der vorstehenden Ansprüche, wobei die Schokoladenzusammensetzung von einem oder mehreren des Hauptkörpers oder der entfernbaren Abschnitte Milchschokolade, dunkle Schokolade, einfache Schokolade oder eine Schokoladenmischung umfasst.

10. Feste Schokoladenzusammensetzung nach einem der vorstehenden Ansprüche, wobei der eine entfernbare Abschnitt oder die mehreren entfernbaren Abschnitte eine unregelmäßige oder regelmäßige geometrische Form umfassen.

11. Feste Schokoladenzusammensetzung nach einem der vorstehenden Ansprüche, wobei ein entfernbarer Abschnitt oder mehrere entfernbare Abschnitte die gleiche Dicke wie mindestens ein Abschnitt des Hauptkörpers umfassen.

12. Feste Schokoladenzusammensetzung nach einem der vorstehenden Ansprüche, wobei ein entfernbarer Abschnitt oder mehrere entfernbare Abschnitte eine Dicke, die entweder größer als oder kleiner als die des Hauptkörpers ist, umfassen.

13. Feste Schokoladenzusammensetzung nach einem der vorstehenden Ansprüche, wobei ein entfernbarer Abschnitt oder mehrere entfernbare Abschnitte einen entfernbaren oder mehrere weitere entfernbare Unterabschnitte umfassen.

## Revendications

1. Composition de chocolat solide comprenant un corps principal composé de plusieurs morceaux ou unités consommables séparés par des lignes de faiblesse, et comprenant en outre une ou plusieurs parties de chocolat amovibles placées dans le périmètre de la composition et espacées de celui-ci, et dans laquelle la ou les parties amovibles sont reliées au corps principal par une ou plusieurs zones ou lignes de faiblesse et peuvent être retirées de la composition sans modifier le périmètre de la composition.

2. Composition de chocolat solide selon la revendication 1, dans laquelle le corps principal a une forme cubique et définit une tablette rectangulaire.

3. Composition de chocolat solide selon l'une quelconque des revendications précédentes, dans laquelle une ou plusieurs parties amovibles sont reliées au corps principal au moyen d'une ligne continue ou d'une zone de faiblesse.

4. Composition de chocolat solide selon l'une quelconque des revendications précédentes, dans laquelle une ou plusieurs parties amovibles sont reliées au corps principal au moyen d'une zone ou d'une ligne de faiblesse intermittente ou discontinue.

5. Composition de chocolat solide selon l'une quelconque des revendications précédentes, dans laquelle une ou plusieurs parties amovibles sont situées au centre du périmètre du corps principal.

6. Composition de chocolat solide selon l'une quelconque des revendications précédentes, dans laquelle une ou plusieurs parties amovibles sont situées de façon excentrée à l'intérieur du corps principal, par exemple à proximité ou sur le bord du périmètre du corps principal.

7. Composition de chocolat solide selon l'une quelconque des revendications précédentes, dans laquelle le corps principal et une ou plusieurs parties amovibles sont constitués de la même composition de chocolat.

8. Composition de chocolat solide selon l'une quelconque des revendications précédentes, dans laquelle le corps principal et une ou plusieurs parties amovibles sont constitués de compositions de chocolat différentes.

9. Composition de chocolat solide selon l'une quelconque des revendications précédentes, dans laquelle la composition de chocolat d'un ou plusieurs parmi le corps principal ou les parties amovibles comprend du chocolat au lait, du chocolat noir, du chocolat ordinaire ou du chocolat composé.

10. Composition de chocolat solide selon l'une quelconque des revendications précédentes, dans laquelle la ou les parties amovibles ont une forme géométrique irrégulière ou régulière.

11. Composition de chocolat solide selon l'une quelconque des revendications précédentes, dans laquelle une ou plusieurs parties amovibles ont la même épaisseur qu'au moins une partie du corps principal.

12. Composition de chocolat solide selon l'une quelconque des revendications précédentes, dans laquelle une ou plusieurs parties amovibles ont une épaisseur supérieure ou inférieure à celle du corps principal.

13. Composition de chocolat solide selon l'une quelconque des revendications précédentes, dans laquelle une ou plusieurs parties amovibles comprennent une ou plusieurs autres sous-parties amovibles.
